# EUROPÄISCHE PATENTANMELDUNG

(11) **EP 2 368 741 A2**
(43) Veröffentlichungstag der Anmeldung: **28.09.2011**
(21) Anmeldenummer: 11450024.2
(22) Anmeldetag: 18.02.2011
(51) Int. Cl.: B60K 15/03

(54) **Betriebsmittelbehälter und Flansch hiefür**

(30) Priorität: 08.03.2010 AT 1352010 U
(71) Anmelder: Alutech Gesellschaft m.b.H., 5651 Lend (AT)
(72) Erfinder: Tevini, Gerhard, 5700 Zell am See (AT)
(74) Vertreter: Weiser, Andreas

(57) **Zusammenfassung**

Flansch (5) zur Montage eines Anbauteils (4), insbesondere Filters, an der Öffnung (3) eines Betriebsmittelbehälters (2), mit ersten Befestigungsbohrungen (7, 10) zur Befestigung des Flansches (5) am Rand der Öffnung (3) und zweiten Befestigungsbohrungen (9, 12) zur Befestigung des Anbauteils (4) am Flansch (5), wobei die ersten und/oder die zweiten Befestigungsbohrungen (7, 10; 9, 12) einen Kranz von winkelmäßig in 45° oder kleineren Schritten verteilten Bohrungen (10, 12) bilden.

## Beschreibung

Die vorliegende Erfindung betrifft einen Flansch zur Montage eines Anbauteils, insbesondere Filters, an der Öffnung eines Betriebsmittelbehälters. Die Erfindung betrifft ferner einen Betriebsmittelbehälter mit einem solchen Flansch.

Nach dem derzeitigen Stand der Technik ist es nicht möglich, alle heute gebräuchlichen Anbauteile und diese in verschiedenen Einbaulagen an ein und demselben Flansch zu verbauen. Es werden daher Adapterplatten verwendet, welche die am Flansch vorhandenen Befestigungsmöglichkeiten auf die für den Anbauteil und dessen Einbaulage erforderlichen Befestigungsmöglichkeiten umsetzen.

Die Erfindung setzt sich zum Ziel, diese Nachteile des Standes der Technik zu überwinden und einen Flansch für Betriebsmittelbehälter zu schaffen, welcher Adapterplatten für Anbauteile erübrigt. Dieses Ziel wird erfindungsgemäß mit einem Flansch mit den Merkmalen des Anspruchs 1 erreicht.

Auf diese Weise können verschiedenste Anbauteile in unterschiedlichen Verdrehstellungen gemäß den durch die Bohrungen vorbereiteten Winkelstellungen montiert werden. Der Flansch der Erfindung ist universell für eine Vielzahl gebräuchlicher Filter und deren Einbaulagen geeignet. In der einen Variante der Erfindung brauchen zum Drehen des Anbauteils lediglich die in die ersten Befestigungsbohrungen eingreifenden Elementen gelöst und der Flansch mitsamt dem Anbauteil in einer beliebigen Drehstellung wiederangebracht werden, in der anderen Variante kann der Flansch am Betriebsmittelbehälter belassen und der Anbauteil in einer beliebigen Drehstellung montiert werden.

Bevorzugt ist der Flansch auf zumindest einer Stirnseite mit einer umlaufenden Dichtung ausgestattet. Dadurch kann selbst nach einem Lösen und Wiederverbinden der ersten Befestigungsmittel ausgezeichnete Dichtheit erreicht werden.

Besonders vorteilhaft ist es, wenn der Flansch die Form eines flachen Rings hat, wodurch er nur geringen Bauraum beansprucht.

Ein weiterer Aspekt der Erfindung ist ein Betriebsmittelbehälter, der mit einem Flansch der vorgestellten Art ausgestattet ist.

Die Erfindung wird nachstehend anhand eines in den beigeschlossenen Zeichnungen dargestellten Ausführungsbeispiels näher erläutert. In den Zeichnungen zeigen
Fig. 1 eine erste Ausführungsform des Flanschs der Erfindung in der Verwendungsstellung an einem Fahrzeugtank und mit einem beispielhaften ersten Anbauteil in der Perspektivansicht;
Fig. 2 den Flansch von Fig. 1 mit einem zweiten beispielhaften Anbauteil in der Perspektivansicht; und
die Fig. 3, 4 und 5 eine zweite Ausführungsform des Flansches der Erfindung in der Perspektivansicht von oben, von unten und im Schnitt.

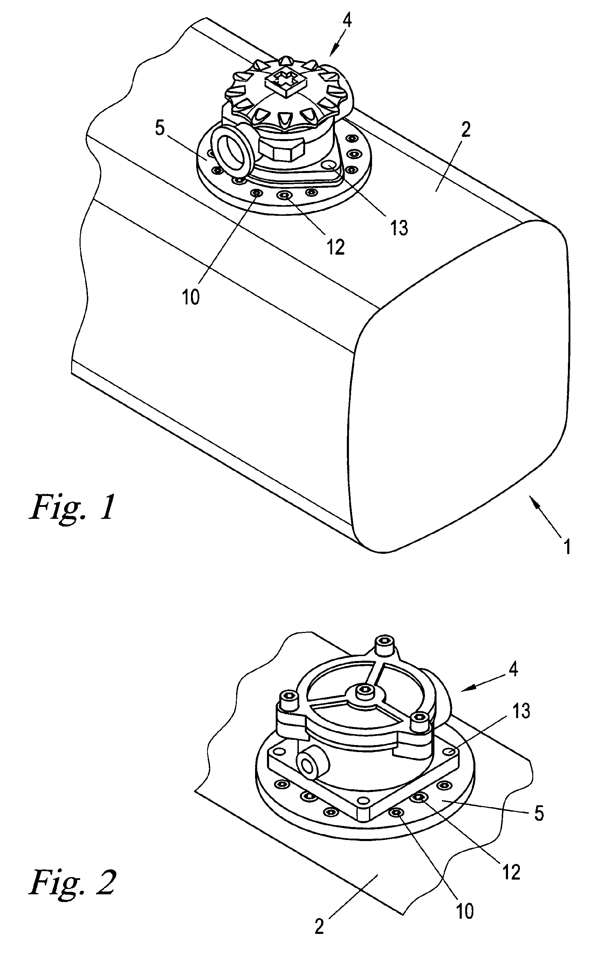

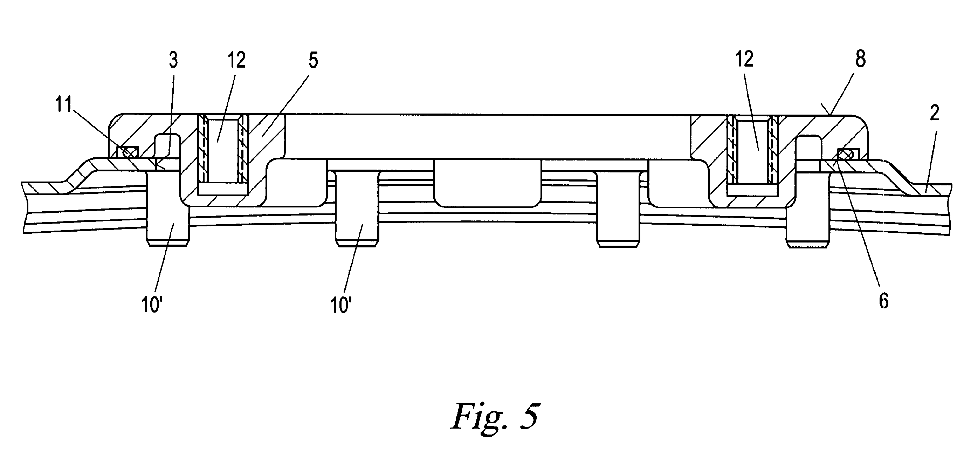

In den Fig. 1 bis 5 ist ein Betriebsmittelbehälter 1 gezeigt, beispielsweise ein Kraftstofftank, Hydrauliköl- oder Katalysatorbehälter od.dgl. für einen Lastkraftwagen. In der Wandung 2 des Betriebsmittelbehälters 1 ist - als oder zusätzlich zu Entnahme- und Füllöffnung(en) - eine Öffnung 3 für den Anschluß eines Anbauteils 4 in Fluidverbindung mit dem Inneren des Behälters 1 ausgebildet. Der Anbauteil 4 kann beliebiger Art sein, z.B. ein Füllstandsgeber, Heizelement, eine Pumpe, eine Entnahme- oder Fülleitung od.dgl. Bevorzugt ist der Anbauteil 4 ein Filter, welcher in einer bestimmten Drehlage auf der Öffnung 3 dicht montiert werden muß und von dem die Fig. 1 und 2 zwei verschiedene Ausführungsformen und Einbaulagen zeigen.

Zur Anpassung an verschiedene Ausbauteile 4 und Einbaulagen ist ein Flansch 5 vorgesehen. Der Flansch 5 hat etwa die Form eines flachen Ringes und ist auf seiner dem Behälter 1 zugewandten Stirnseite 6 mit ersten Befestigungsmitteln 7 zur Verankerung am Rand der Öffnung 3 und an seiner oberen Stirnseite 8 mit zweiten Befestigungsmitteln 9 zur Verankerung des Anbauteils 4 ausgestattet ist.

Die ersten Befestigungsmittel 7 sind ein Kranz von winkelmäßig in 45°-Schritten verteilten Bohrungen 10 zur Aufnahme von Schrauben, Bolzen od.dgl. (nicht gezeigt), welche in entsprechende (Sack-)Bohrungen 10' in der Wandung 2 des Tanks 1 rund um die Öffnung 3 eingreifen. Zwischen Flansch 5 und Außenseite der Wandung 2 ist eine umlaufende Dichtung 11 zwischengelegt.

Auch die zweiten Befestigungsmittel 9 sind im gezeigten Beispiel durch einen Kranz von winkelmäßig in 45°-Schritten verteilten (Sack-)Bohrungen 12 ausgebildet, in welche entsprechende Schrauben 13, Bolzen od.dgl. des Anbauteils 4 eingreifen können. Dadurch kann ein Anbauteil 4, der gemäß Fig. 1 z.B. in zwei oder gemäß Fig. 2 in vier der Bohrungen 12 verankert wird, in 45°-Winkelschritten - unter Verwendung jeweils verschiedener Bohrungen 12 - beliebig gedreht montiert werden.

Alternativ (oder zusätzlich) kann der Anbauteil 4 mitsamt dem Flansch 5 in 45°-Winkelschritten an der Öffnung 3 verankert werden, indem verschiedene Bohrungen 10 verwendet werden.

Im Ergebnis kann der Anbauteil 4 bei beiden Varianten in beliebigen Winkelstellungen - entsprechend den von den Bohrungen 10, 12 bereitgestellten Winkelschritten - montiert werden.

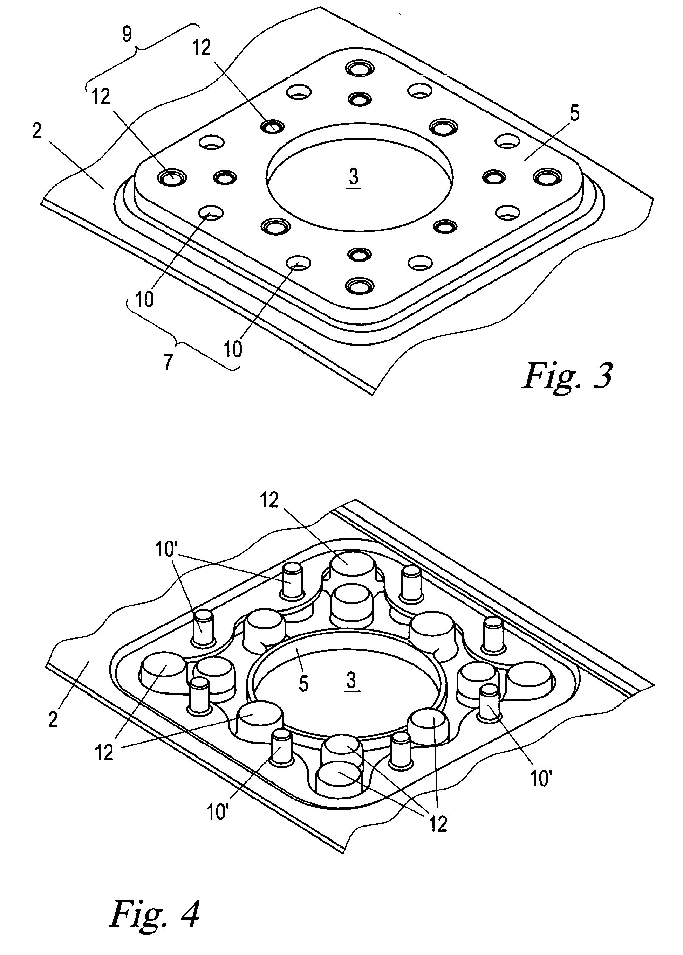

Die Bohrungen 10, 12 können auch in kleineren als 45°-Winkelschritten verteilt sein, z.B. in Winkelschritten von 360°/n (n > 8). Auch ist es möglich, eine Vielzahl von Bohrungen 12 z.B. in konzentrischen Kreisen von unterschiedlichem Radius (siehe Fig. 3) und/oder in verschiedenartiger Verteilung vorzusehen, sodaß beliebige Anbauteile 4 mit unterschiedlichen Verteilungen der Schrauben 13 montiert werden können. So könnten die Bohrungen 12 beispielsweise auch in Form eines Rasters über die gesamte Stirnseite 8 des Flansches 5 verteilt sein.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1. Flansch (5) zur Montage eines Anbauteils (4), insbesondere Filters, an der Öffnung (3) eines Betriebsmittelbehälters (2), **gekennzeichnet durch** erste Befestigungsbohrungen (7, 10) zur Befestigung des Flansches (5) am Rand der Öffnung (3) und zweite Befestigungsbohrungen (9, 12) zur Befestigung des Anbauteils (4) am Flansch (5), wobei die ersten und/oder die zweiten Befestigungsbohrungen (7, 10; 9, 12) einen Kranz von winkelmäßig in 45° oder kleineren Schritten verteilten Bohrungen (10, 12) bilden.

2. Flansch nach Anspruch 1, **dadurch gekennzeichnet, dass** er auf zumindest einer Stirnseite (6) mit einer umlaufenden Dichtung (11) ausgestattet ist.

3. Flansch nach Anspruch 1 oder 2, **dadurch gekennzeichnet, dass** er die Form eines flachen Rings hat.

4. Betriebsmittelbehälter mit einer Öffnung (3) in seiner Wandung (2), **gekennzeichnet durch** einen Flansch (5) nach einem der Ansprüche 1 bis 3, dessen erste Befestigungsbohrungen (7, 10) Schrauben, Bolzen od.dgl. aufnehmen, die in Sackbohrungen (10') in der Wandung (2) rund um die Öffnung (3) eingreifen.

5. Betriebsmittelbehälter nach Anspruch 4, **dadurch gekennzeichnet, dass** die zweiten Befestigungsbohrungen (9, 12) einen Kranz von winkelmäßig in 45° oder kleineren Schritten verteilten Bohrungen (12) bilden, in welche Schrauben (13), Bolzen od.dgl. des Anbauteils (4) eingreifen.
